# DEMANDE DE BREVET EUROPEEN

(11) **EP 3 470 453 A1**
(43) Date de publication de la demande: **17.04.2019**
(21) Numéro de dépôt: 18306355.1
(22) Date de dépôt: 16.10.2018
(51) Int. Cl.: C08G 77/12, C08G 77/20, C08L 83/04, G09F 13/16, G09F 13/20

(54) **COMPOSITION LUMINESCENTE, OBJET LUMINESCENT NOTAMMENT ENSEIGNE FORMÉ D'UNE TELLE COMPOSITION ET PROCÉDÉ DE FABRICATION D'UN TEL OBJET**

(30) Priorité: 16.10.2017 FR 1759700
(71) Demandeur: C&B Lum. Design, 45170 Chilleurs-aux-Bois (FR)
(72) Inventeur: BURTIN, Christian, 45170 CHILLEURS-AUX-BOIS (FR)
(74) Mandataire: Chaffraix, Jean

(57) **Abrégé**

Cette composition luminescente est formée de constituants comprenant environ 70% en masse de silicone alimentaire et environ de 30 % en masse de produit luminescent. Ces constituants sont choisis de façon à ce que les objets fabriqués à partir de cette composition présentent une innocuité quasi parfaite. Les objets luminescents sont obtenus de préférence par moulage selon le procédé de l'invention. L'invention trouve des applications, notamment, dans la signalisation routière.

## Description

La présente invention concerne une composition luminescente passif autonome.

Ce qu'on entend par luminescence est la capacité de certains corps, non-incandescents, d'émettre de la lumière sous l'effet d'une excitation.

L'excitation est, de préférence, dans le cadre de cette invention une exposition à une lumière naturelle, de la composition de sorte qu'un rayonnement perceptible soit restitué dans l'obscurité. Il est bien évident que cela n'exclut pas une exposition à un rayonnement ultra volet si l'application le nécessite.

L'invention concerne aussi des objets luminescents formés à partir d'une telle composition.

L'invention concerne encore un procédé de fabrication de tels objets.

De tels dispositifs sont bien connus. Ils peuvent par exemple suppléer l'usage par exemple des dispositifs du genre utilisant des diodes LED et comportant donc un accumulateur. Cependant ces dispositifs présentent l'inconvénient d'une part de charger, au bout d'un certain temps d'utilisation, les accumulateurs et, d'autre part, la lumière fournie présente des caractéristiques susceptibles de détériorer la vue par excès de lumière bleue que ces diodes fournissent. Ceci peut être particulièrement préjudiciable aux enfants en contact avec de tels objets.

On connait aussi des objets phosphorescents qui deviennent donc lumineux après une exposition à la lumière lorsqu'ils sont plongés dans l'obscurité. Ces objets sont bien répandus dans le public mais cependant ils sont susceptibles de présenter une certaine toxicité ce qui par prudence les exclut d'être utilisés par des enfants.

Le but de l'invention est, donc, de fournir un dispositif du genre mentionné dans le préambule qui présente de bonnes qualités de phosphorescence tout en présentant pratiquement une innocuité totale tant pour les enfants que pour les adultes.

Pour cela, une telle composition est formée à partir de 70% en masse de silicone alimentaire environ et d'environ de 30 % en masse de produit luminescent.

L'invention trouve des applications importantes par exemple on peut citer d'une manière non limitative : jouets pour enfants (personnages de bandes dessinées) bornes de repérages nocturne pour baliser des espaces publics (parcs, routes) etc.

Une application particulièrement attractive est celle concernant les enseignes, publicitaires en autres. Celles-ci par les mesures préconisées par l'invention deviennent visibles la nuit sans contrevenir aux règles d'économie d'énergie notamment.

La description suivante accompagnée des dessins ci-annexés, le tout donné à titre d'exemple non limitatif, fera bien comprendre comment l'invention peut être réalisée.
La figure 1 montre, de jour, une enseigne réalisée selon l'invention.
La figure 2 montre, de nuit, une enseigne réalisée selon l'invention.

La composition luminescente de l'invention est formée de constituants comprenant environ 70% en masse de silicone alimentaire environ et d'environ de 30 % en masse de produit luminescent.

La présence de silicone alimentaire garantit déjà l'innocuité de cette composition. On utilise de préférence un élastomère de qualité alimentaire à base de silicone du type RTV PRODESIL®PAE32. Le produit luminescent est basé sur des pigments luminescents du type CHRYSO®Lumin SP. Les documents de données de sécurité garantissent aussi l'innocuité de la composition. Cs produits ont été choisis après analyse des produits du commerce pour leur innocuité. Mais l'utilisation d'autres produits garantissant l'innocuité rentre dans le cadre de l'invention.

Selon des variantes de réalisation de cette composition, on peut aussi rajouter dans cette composition des pigments de couleur pour donner un aspect plus attrayant aux objets obtenus à partir de cette composition.

Pour des petits objets, vendus comme souvenirs, par exemple, on peut aussi rajouter des parfums. On préférera, pour cela, des parfums de synthèse qui résisteront mieux au temps et aux manipulations de fabrication.

Ces objets peuvent être fabriqués, à partir de la composition de l'invention de la manière suivante en utilisant le procédé ci-dessous :
On élabore tout d'abord un moule en PU (polyuréthane) qui peut être déjà le moulage d'un objet réel.

Concomitamment on mélange les différents constituants déjà cités. C'est-à-dire : la poudre de produits luminescents avec la résine silicone alimentaire et autres ingrédients. On peut mentionner comme autres ingrédients : les pigments de couleurs ainsi que des parfums de synthèse. Pour obtenir un certain aspect de l'objet fini, on choisira, notamment la couleur des produits luminescents voire en mélanger plusieurs. Ces produits existent bien souvent en plusieurs couleurs. (blanc, bleu, vert etc.). On peut jouer aussi sur la couleur des pigments de couleur qui procurent un certain aspect de l'objet en lumière du jour et même aussi à l'état de luminescence.

Ces constituants sont ensuite mélangés puis ensuite coulés dans ledit moule. On laisse sécher l'ensemble selon une durée de l'ordre de 24h et on procède finalement au démoulage pour obtenir l'objet.

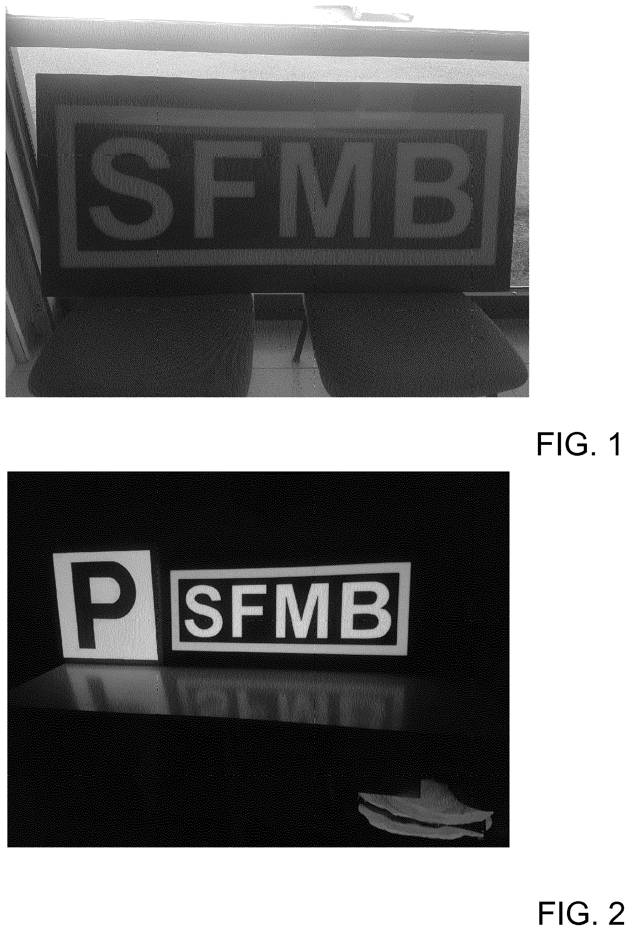

Comme exemple d'application de l'invention, on a montré une enseigne qui se présente normalement comme une enseigne ordinaire, la figure 2 représente la même enseigne vue de nuit. Cet aspect lumineux ne nécessite aucune source d'énergie, comme on l'a déjà dit.

## Revendications

1. Composition luminescente **caractérisée en ce qu'**elle est formée de constituants consistant en 70% en masse de silicone alimentaire environ et en 30 % en masse de produit luminescent environ.

2. Composition luminescente selon la revendication 1, **caractérisée en ce que** le silicone alimentaire est un élastomère de qualité alimentaire à base de silicone du type RTV PRODESIL®PAE32 et le produit luminescent étant basé sur des pigments luminescents du type CHRYSO®Lumin SP.

3. Composition luminescente selon la revendication 1 ou 2 **caractérisée en ce qu'**elle comporte des pigments de couleur.

4. Composition luminescente selon la revendication 1 ou 2 ou 3 **caractérisée en ce qu'**elle comporte des parfums de synthèse.

5. Objet luminescent formé à partir d'une composition luminescente selon une des revendications 1 à 4.

6. Objet luminescent selon la revendication 5 **caractérisé en ce qu'**il est constitué par une enseigne.

7. Procédé de fabrication d'un objet selon la revendication 5 ou 6 **caractérisé en ce qu'**il comporte les étapes suivantes :
a) fabrication d'un moule en PU (polyuréthane)
b) mélange des constituants (silicone alimentaire et produits luminescents)
c) coulage du mélange dans ledit moule,
d) séchage de l'ordre de 24
e) démoulage.
